# FASCICULE DE BREVET EUROPEEN

(11) **EP 3 828 018 B1**
(45) Date de publication et mention de la délivrance du brevet: **20.03.2024**
(21) Numéro de dépôt: 20210006.1
(22) Date de dépôt: 26.11.2020
(51) Int. Cl.: B60H 1/00, B60H 1/14, B60H 1/32

(54) **DISPOSITIF DE GESTION DE L'ÉNERGIE THERMIQUE DANS UN VÉHICULE**
VORRICHTUNG ZUR STEUERUNG DER WÄRMEENERGIE IN EINEM FAHRZEUG
DEVICE FOR MANAGING THERMAL ENERGY IN A VEHICLE

(30) Priorité: 29.11.2019 FR 1913488
(43) Date de publication de la demande: 02.06.2021
(73) Titulaire: Commissariat à l'Energie Atomique et aux Energies Alternatives, 75015 Paris (FR)
(72) Inventeur: DUMOULIN, Pierre, 38054 GRENOBLE (FR)
(74) Mandataire: Hautier IP

(56) Documents cités:
- DE-A1-102009 028 332
- DE-A1-102013 106 831
- GB-A- 2 529 162
- US-A1- 2016 107 508
- US-A1- 2018 222 286
- US-A1- 2019 145 675

## Description

### DOMAINE TECHNIQUE

La présente invention concerne le domaine de la gestion de l'énergie thermique dans un véhicule et plus généralement la gestion des flux énergétiques. Elle trouve pour application particulièrement avantageuse le domaine des véhicules dits électriques ou hybrides c'est-à-dire comprenant un moteur électrique muni de système de climatisation de l'habitacle.

### ÉTAT DE LA TECHNIQUE

La climatisation de l'habitacle d'un véhicule est un équipement devenu essentiel pour le confort du conducteur et des passagers. La climatisation qui comprend le chauffage et le refroidissement de l'habitacle est consommatrice d'une grande quantité d'énergie. Or, dans les véhicules à moteur électrique ou hybride, utilisant à la fois un moteur électrique et un moteur supplémentaire tel qu'un moteur thermique, l'énergie pour la climatisation est tirée de l'énergie électrique c'est-à-dire des batteries stockant l'énergie électrique du véhicule. L'utilisation de la climatisation conduit ainsi à une forte augmentation de la consommation électrique et donc une très forte baisse de l'autonomie du véhicule.

Il est connu d'utiliser des pompes à chaleur dans ce type de véhicule pour récupérer de l'énergie thermique gratuite en utilisant le différentiel thermique entre un fluide réfrigérant de la pompe à chaleur et l'air environnant. Ces pompes à chaleur de type aérothermique nécessitent des composants supplémentaires qui impactent sur l'encombrement du véhicule.

On connait le document DE 10 2013 106831 A1 qui décrit un système de climatisation pour véhicule hybride ou électrique structurellement simple, compact et peu coûteux qui puisse fonctionner de manière particulièrement économe en énergie à la fois en mode refroidissement et en mode chauffage.

On connait également le document US 2018/222286 A1 qui décrit un procédé pour le chauffage d'un habitacle pendant le refroidissement d'une batterie en charge rapide et se propose d'assurer une gestion thermique des batteries.

On connait également US 2016/107508 A1 qui décrit un système de gestion thermique d'un véhicule avec des communications thermiques entre une boucle de réfrigération et trois boucles de contrôle thermique indépendantes du système correspondant à la boucle de contrôle thermique de la cabine passager, la boucle de contrôle thermique de la batterie et la chaîne cinématique boucle de régulation thermique.

On connait également DE 10 2009 028332 A1 qui décrit un dispositif de régulation de température d'au moins un composant thermique d'un véhicule automobile en particulier un véhicule électrique ou hybride. Les composants du véhicule sont connectés aux différents circuits fluidiques en fonction des besoins de chauffage ou de refroidissement.

Un objet de la présente invention est donc de proposer un dispositif qui permet à la fois d'augmenter l'autonomie des véhicules électriques ou hybrides utilisant une climatisation tout en assurant une réduction de l'encombrement.

Les autres objets, caractéristiques et avantages de la présente invention apparaîtront à l'examen de la description suivante et des dessins d'accompagnement. Il est entendu que d'autres avantages peuvent être incorporés.

### RÉSUMÉ

Pour atteindre cet objectif, l'invention prévoit un dispositf suivant toutes les caractéristiques de la revendication 1. Ledit dispositif de gestion de l'énergie thermique d'un véhicule comprend un moteur électrique et comprend une pompe à chaleur eau préférentiellement glycolée/eau préférentiellement glycolée c'est-à-dire assurant un échange thermique entre un fluide caloporteur de la pompe à chaleur et respectivement un premier fluide intermédiaire et un deuxième fluide intermédiaire.

Selon l'invention, le dispositif de gestion de l'énergie thermique d'un véhicule comprend un moteur électrique, on entend par là les véhicules dit électriques et les véhicules hybrides comprenant un moteur électrique et un moteur supplémentaire par exemple thermique, comprenant : une batterie électrique configurée pour stocker l'énergie électrique du véhicule, une machine électrique pour transformer l'énergie électrique stockée dans la batterie en énergie mécanique de rotation pour le véhicule, un module de contrôle de la température de la machine électrique comprenant un premier circuit fluidique apte à recevoir un premier fluide intermédiaire et un premier échangeur thermique basse température, un échangeur thermique d'un groupe de climatisation, caractérisé en ce que le dispositif comprend une pompe à chaleur avantageusement eau/eau comprenant - un circuit fluidique apte à recevoir un fluide caloporteur, - un premier échangeur thermique configuré pour assurer l'échange thermique entre le fluide caloporteur de la pompe à chaleur et au moins le premier fluide intermédiaire du premier circuit fluidique du module de contrôle de la température de la machine électrique, - un deuxième échangeur thermique configuré pour assurer l'échange thermique entre le fluide caloporteur de la pompe à chaleur et au moins un deuxième fluide intermédiaire de l'échangeur thermique du groupe de climatisation; - un compresseur alimenté en énergie électrique, - le circuit fluidique étant configuré pour mettre en connexion fluidique le premier échangeur thermique avec le compresseur, le compresseur avec le deuxième échangeur thermique et le deuxième échangeur thermique avec le premier échangeur thermique.

La présente invention permet d'optimiser l'encombrement de la pompe à chaleur. En effet, la pompe à chaleur à fluide intermédiaire permet notamment de libérer de la place en façade avant du véhicule en permettant de déplacer le premier échangeur thermique (le condenseur) de la pompe à chaleur qui n'a plus de nécessité d'échanger avec l'air ambiant dans le coffre ou sous le capot.

De même au niveau du groupe de climatisation, le deuxième échangeur thermique (l'évaporateur) peut être rapproché du compresseur avec, avantageusement, seul l'échangeur du groupe de climatisation est agencé à proximité de l'habitacle.

Selon l'invention, la pompe à chaleur à fluide intermédiaire est plus compacte qu'une pompe à chaleur aérotherme. De ce fait, il est possible d'utiliser un fluide caloporteur plus performant que ceux utilisés dans les pompes à chaleur aérothermes. Le circuit fluidique étant plus compact, l'utilisation d'un fluide caloporteur plus performant, plus écologique et moins dangereux est possible.

La pompe à chaleur échange avantageusement directement l'énergie thermique avec le fluide intermédiaire du dispositif de contrôle de la température de la machine électrique. Cet échange direct dans l'échangeur fluide-fluide est plus efficace que la récupération de l'énergie thermique par l'air circulant entre ledit condenseur de la pompe à chaleur et l'échangeur basse température du dispositif de contrôle de la température de la machine électrique.

Suivant un autre aspect, l'invention concerne un véhicule comprenant un moteur électrique comprenant un dispositif tel que décrit précédemment.

Suivant un autre aspect, l'invention concerne un procédé de gestion de l'énergie thermique d'un véhicule comprenant un moteur électrique comprenant un dispositif tel que décrit ci-dessus dans lequel la pompe à chaleur est configurée pour transférer l'énergie thermique entre la machine électrique et l'échangeur du groupe de climatisation par une étape a) d'échange thermique dans le premier échangeur de la PAC entre le premier fluide intermédiaire du premier circuit fluidique de la machine électrique et le fluide caloporteur de la PAC pour céder l'énergie thermique du premier fluide intermédiaire du premier circuit fluidique de la machine électrique au profit du fluide caloporteur de la PAC, et une étape b) d'échange thermique dans le deuxième échangeur de la PAC entre le fluide caloporteur de la PAC et le deuxième fluide intermédiaire du deuxième circuit intermédiaire du groupe de climatisation pour céder l'énergie thermique du fluide caloporteur de la PAC au profit du deuxième fluide intermédiaire du deuxième circuit intermédiaire du groupe de climatisation, ou alternativement par une étape c) d'échange thermique dans le deuxième échangeur de la PAC entre le deuxième fluide intermédiaire du deuxième circuit intermédiaire du groupe de climatisation et le fluide caloporteur de la PAC pour céder l'énergie thermique du deuxième fluide intermédiaire du deuxième circuit intermédiaire du groupe de climatisation au profit du fluide caloporteur de la PAC, et une étape d) d'échange thermique dans le premier échangeur de la PAC entre le fluide caloporteur de la PAC et le premier fluide intermédiaire du premier circuit fluidique de la machine électrique pour céder l'énergie thermique du fluide caloporteur de la PAC au profit ,du premier fluide intermédiaire du premier circuit fluidique de la machine électrique .

Ce procédé permet d'assurer un échange thermique entre la machine électrique et le groupe de climatisation par l'intermédiaire de la pompe à chaleur soit depuis la machine électrique vers le groupe de climatisation, le premier fluide intermédiaire du dispositif de contrôle de la température de la machine électrique étant au moins en partie la source chaude du premier échangeur thermique de la PAC et le deuxième fluide intermédiaire de l'échangeur du groupe de climatisation étant au moins en partie la source froide du deuxième échangeur thermique de la PAC, soit depuis le groupe de climatisation vers la machine électrique, le premier fluide intermédiaire du dispositif de contrôle de la température de la machine électrique étant au moins en partie la source froide du premier échangeur thermique de la PAC et le deuxième fluide intermédiaire de l'échangeur du groupe de climatisation étant au moins en partie la source chaude du deuxième échangeur thermique de la PAC.

### BRÈVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
La figure 1 représente un schéma du dispositif selon l'invention regroupant les différents modes de réalisation.
La figure 2 représente un schéma du dispositif selon l'invention selon un premier mode de réalisation correspondant à une demande de chaleur par le groupe de climatisation.
La figure 3 représente un schéma du dispositif selon l'invention une variante du premier mode de réalisation illustré à la figure 2 correspondant à une demande de chaleur avec utilisation de calories de la batterie.
La figure 4 représente un schéma du dispositif selon l'invention selon un deuxième mode de réalisation correspondant à une demande de froid par le groupe de climatisation.
La figure 5 représente un schéma du dispositif selon l'invention une variante du deuxième mode de réalisation illustré à la figure 3 correspondant à une demande de froid avec stockage de calories dans la batterie.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques.

### DESCRIPTION DÉTAILLÉE

Avant d'entamer une revue détaillée de modes de réalisation de l'invention, sont énoncées ci-après des caractéristiques optionnelles qui peuvent éventuellement être utilisées en association ou alternativement.

Selon l'invention, le dispositif comprend un module de contrôle de la température de la batterie comprenant un troisième circuit fluidique apte à recevoir un troisième fluide intermédiaire et avantageusement un deuxième échangeur thermique basse température.

Cette disposition permet d'assurer un transfert thermique entre la pompe à chaleur et la batterie avantageusement que ce soit pour récupérer de l'énergie thermique de la batterie au profit de la pompe à chaleur ou bien de transférer de l'énergie thermique vers la batterie en provenance avantageusement de l'habitacle par l'intermédiaire de l'échangeur du groupe de climatisation.

Selon l'invention, le premier circuit fluidique du module de contrôle de la température de la machine électrique est configuré pour assurer la connexion fluidique entre la machine électrique et le premier échangeur thermique basse température. Avantageusement, le premier circuit fluidique du module de contrôle de la température de la machine électrique comprend une première branche de dérivation configurée pour empêcher une circulation du premier fluide intermédiaire au niveau du premier échangeur thermique basse température et avantageusement une deuxième branche de dérivation configurée pour assurer la circulation du premier fluide intermédiaire dans le premier échangeur de la pompe à chaleur.

Cette disposition permet d'utiliser comme source chaude de la pompe à chaleur directement l'énergie thermique fatale de la machine électrique sans déperdition au niveau du deuxième échangeur thermique du module de contrôle de la température de la machine électrique. De plus, l'absence de circulation du premier fluide intermédiaire du module de contrôle de la température de la machine électrique dans le premier échangeur thermique basse température limite les risques de givrage de l'échangeur basse température en façade avant du véhicule ce qui limite donc les pertes thermiques nécessaires pour le dégivrer.

Selon l'invention, le troisième circuit fluidique du module de contrôle de la température de la batterie est configuré pour assurer la connexion fluidique entre la batterie et le deuxième échangeur thermique basse température, le troisième circuit fluidique comprenant une première branche de dérivation configurée pour empêcher une circulation du troisième fluide intermédiaire au niveau du deuxième échangeur thermique basse température et avantageusement une deuxième branche de dérivation configurée pour assurer la circulation du troisième fluide intermédiaire dans le premier échangeur de la pompe à chaleur.

Cette disposition permet d'utiliser comme source chaude de la pompe à chaleur directement l'énergie thermique fatale de la batterie sans déperdition au niveau du deuxième échangeur thermique du module de contrôle de la température de la batterie. De plus, l'absence de circulation du troisième fluide intermédiaire du module de contrôle de la température de la batterie dans le deuxième échangeur thermique basse température limite les risques de givrage de l'échangeur basse température en façade avant du véhicule ce qui limite donc les pertes thermiques nécessaires pour le dégivrer.

Selon l'invention, le troisième circuit fluidique du module de contrôle de la température de la batterie comprend une troisième branche de dérivation configurée pour assurer la circulation du troisième fluide intermédiaire dans le deuxième échangeur de la pompe à chaleur.

Cette disposition permet d'assurer un transfert d'énergie thermique de la pompe à chaleur vers la batterie notamment dans le cas d'une aide au démarrage de la batterie. En effet, la batterie a pour température optimale de fonctionnement une température comprise entre 25 et 30°C. De cette manière lors du démarrage du véhicule, la batterie qui ne serait pas encore à une température optimale de fonctionnement peut être par exemple chauffée par l'énergie thermique de la PAC et en particulier produite par la PAC à destination du groupe de climatisation et avantageusement également à destination de la batterie.

Avantageusement, le module de contrôle de la température de la machine électrique comprend au moins une vanne et/ou un thermostat et/ou une pompe de mise en circulation du premier fluide intermédiaire.

Avantageusement, le module de contrôle de la température de la batterie comprend au moins une vanne et/ou un thermostat et/ou une pompe de mise en circulation du troisième fluide intermédiaire.

Avantageusement, la pompe à chaleur est configurée pour transférer de l'énergie thermique à la batterie pour l'aide au démarrage par une étape e) alternative ou cumulative avec l'étape b) d'échange thermique dans le deuxième échangeur de la PAC entre le fluide caloporteur de la PAC et le troisième fluide intermédiaire du troisième circuit fluidique de la batterie pour céder l'énergie thermique du fluide caloporteur de la PAC au profit du troisième fluide intermédiaire du troisième circuit fluidique de la batterie.

Ce procédé permet d'assurer un échange thermique entre la machine électrique et la batterie par l'intermédiaire de la pompe à chaleur depuis la machine électrique vers la batterie, le premier fluide intermédiaire du dispositif de contrôle de la température de la machine électrique étant au moins en partie la source chaude du premier échangeur thermique de la PAC et le troisième fluide intermédiaire du dispositif de contrôle de la température de la batterie étant au moins en partie la source froide du deuxième échangeur thermique de la PAC.

Avantageusement, la pompe à chaleur est configurée pour transférer de l'énergie thermique entre la batterie et l'échangeur du groupe de climatisation par une étape f) alternative ou cumulative avec l'étape a), d'échange thermique dans le premier échangeur de la PAC entre le troisième fluide intermédiaire du troisième circuit fluidique de la batterie et le fluide caloporteur de la PAC pour céder l'énergie thermique du troisième fluide intermédiaire du troisième circuit fluidique de la batterie au profit du fluide caloporteur de la PAC ou une étape g), alternative ou cumulative avec l'étape c), d'échange thermique dans le premier échangeur de la PAC entre le fluide caloporteur de la PAC et le troisième fluide intermédiaire du troisième circuit fluidique de la batterie pour céder l'énergie thermique du fluide caloporteur de la PAC au profit troisième fluide intermédiaire du troisième circuit fluidique de la batterie.

Ce procédé permet d'assurer un échange thermique entre la batterie et le groupe de climatisation par l'intermédiaire de la pompe à chaleur soit depuis la batterie vers le groupe de climatisation, le troisième fluide intermédiaire du dispositif de contrôle de la température de la batterie étant au moins en partie la source chaude du premier échangeur thermique de la PAC et le deuxième fluide intermédiaire de l'échangeur du groupe de climatisation étant au moins en partie la source froide du deuxième échangeur thermique de la PAC ou le deuxième fluide intermédiaire de l'échangeur du groupe de climatisation étant au moins en partie la source chaude du deuxième échangeur thermique de la PAC et le troisième fluide intermédiaire du dispositif de contrôle de la température de la batterie étant au moins en partie la source froide du premier échangeur thermique de la PAC.

Il est précisé que dans le cadre de la présente invention, le terme « agencé sur », ou ses équivalents signifient « en connexion fluidique ».

Dans la présente description, l'expression « A fluidiquement raccordé à B» est synonyme de « A est en connexion fluidique avec B » ne signifie pas nécessairement qu'il n'existe pas d'organe entre A et B. Les expressions «agencée sur » ou «sur» sont synonymes de « raccordé fluidiquement à ».

L'amont et l'aval en un point donné sont pris en référence au sens de circulation du fluide dans le circuit.

Le dispositif selon l'invention concerne la gestion de l'énergie thermique dans un véhicule équipé d'un moteur électrique.

La gestion de l'énergie thermique s'entend comme la gestion des sources et des besoins en énergie thermique dans ce type de véhicule. Les sources et les besoins en énergie thermique sont ceux pour l'habitacle également dénommé cabine et ses usagers ou bien ceux pour des moyens mécaniques, électriques...

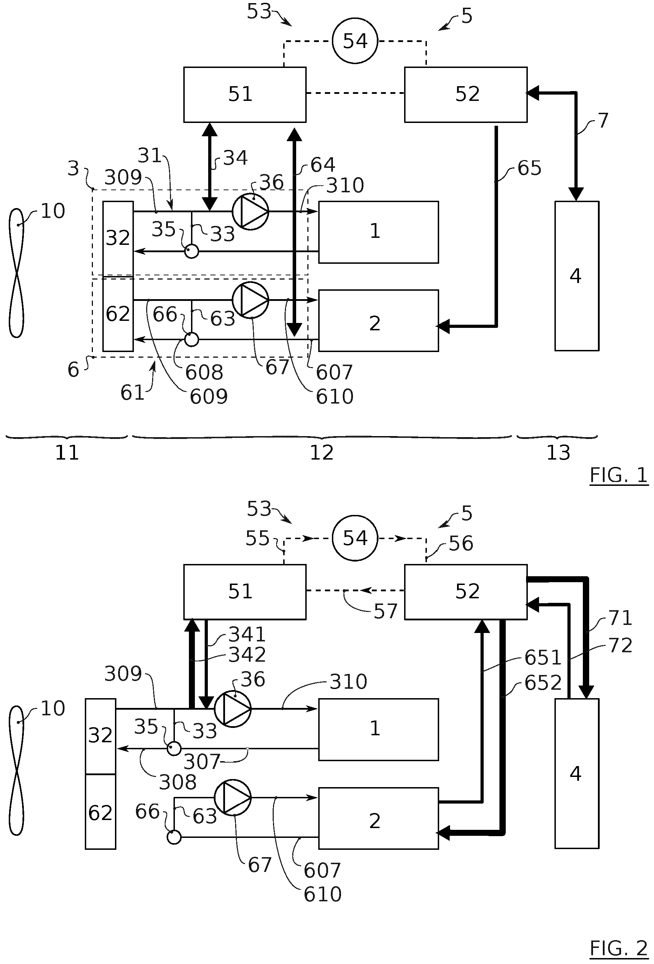

Le dispositif selon l'invention, par exemple illustrée à la figure 1, comprend une batterie électrique 2 configurée pour stocker l'énergie électrique pour le véhicule. Le dispositif comprend avantageusement une machine électrique 1, également dénommé moteur électrique qui est configuré pour transformer l'énergie électrique avantageusement stockée dans la batterie en énergie mécanique par exemple de rotation pour le véhicule notamment pour mettre en rotation les roues du véhicule et assurer un déplacement de celui-ci.

Le dispositif comprend avantageusement un module de contrôle de la température 3 de la machine électrique 1. En effet, la machine électrique 1 qui transforme l'énergie électrique en énergie mécanique produit également de la chaleur qui doit être évacuée. Une machine électrique 1 présente une température de fonctionnement optimal dans laquelle il est avantageux qu'elle soit maintenue. A titre d'exemple une machine électrique 1 utilisable dans le cadre de l'invention présente une température de fonctionnement optimal entre 55 et 60°C. Le module de contrôle de la température 3 de la machine électrique 1 comprend préférentiellement un premier circuit fluidique 31 apte à recevoir un premier fluide intermédiaire. A titre d'exemple, le premier fluide intermédiaire est de l'eau glycolée. Le premier circuit fluidique 31 comprend un premier échangeur thermique basse température 32. Avantageusement, le premier circuit fluidique 31 assure un transfert thermique entre la machine électrique 1 et le premier échangeur basse température 32. Le premier échangeur thermique basse température est destiné à évacuer l'énergie thermique non nécessaire de la machine électrique 1. Selon un mode de réalisation préféré, le premier circuit fluidique 31 comprend une première branche de dérivation 33 configurée pour assurer la circulation du premier fluide intermédiaire sans circulation au niveau de l'échangeur thermique basse température 32. Avantageusement, la circulation du premier fluide intermédiaire dans la branche de dérivation 33 est contrôlée par une vanne ou un thermostat 35 ouvrant la circulation dans la branche de dérivation 33 lorsque la température du premier fluide intermédiaire est inférieure à une température de consigne pour un fonctionnement optimal de la machine électrique 1, par exemple une température de 60°C.

Le dispositif selon l'invention comprend un échangeur thermique 4 d'un groupe de climatisation. Le groupe de climatisation s'entend comme un ensemble d'échangeurs thermiques configuré pour assurer le chauffage ou le refroidissement de l'air de l'habitacle.

De manière caractéristique, le dispositif selon l'invention comprend une pompe à chaleur, ou PAC, à fluide intermédiaire 5, également dénommée couramment PAC eau/eau ou PAC eau glycolée/eau ou bien PAC eau /eau glycolée ou encore PAC eau glycolée /eau glycolée, dans la suite de la présente demande ces termes peuvent être interchangés. Cette PAC à fluide intermédiaire 5 comprend un circuit fluidique 53 apte à recevoir un fluide caloporteur, un compresseur 54, un premier échangeur thermique 51 et un deuxième échangeur thermique 52. Le circuit fluidique 53 est configuré pour relier fluidiquement le compresseur 53 au premier échangeur thermique 51, le premier échangeur thermique 51 au deuxième échangeur thermique 52, le deuxième échangeur thermique 52 au compresseur 53. Avantageusement, la PAC 5 comprend un détendeur, non représenté sur les figures et pouvant être intégré au deuxième échangeur thermique 52.

La PAC à fluide intermédiaire 5 est caractérisée notamment par le fait que le premier échangeur thermique 51 et le deuxième échangeur thermique 52 assurent un transfert thermique entre le fluide caloporteur de la PAC 5 et respectivement au moins un premier fluide intermédiaire au niveau du premier échangeur thermique et au moins un deuxième fluide intermédiaire au niveau du deuxième échangeur thermique 52. Le premier échangeur thermique 51 et le deuxième échangeur thermique 52 n'assurent pas d'échange thermique direct avec l'air ambiant. Le fluide caloporteur de la PAC 5 peut être choisi parmi des fluides caloporteurs performants du fait d'un circuit fluidique 53 de dimension restreinte, il n'est pas nécessaire d'avoir une grande quantité de fluide caloporteur donc un choix d'un fluide plus performant et peut être plus coûteux, éventuellement plus toxique/inflammable peut être envisagé. A titre d'exemple le R290 (propane) ou R717 (ammoniac) pourrait être utilisé. Le fluide caloporteur peut également être appelé fluide réfrigérant.

Avantageusement, le premier échangeur thermique 51 est configuré pour assurer un transfert thermique entre le fluide caloporteur de la PAC 5 et le premier fluide intermédiaire du premier circuit fluidique 31 du module de contrôle de la température de la machine électrique 1.

Avantageusement, le deuxième échangeur thermique 52 est configuré pour assurer un transfert thermique entre le fluide caloporteur de la PAC 5 et le deuxième fluide intermédiaire de l'échangeur thermique 4 du groupe de climatisation. De cette manière, le transfert thermique peut être assuré au moins entre la machine électrique 1 et le groupe de climatisation.

Selon l'invention, le dispositif selon l'invention comprend un module de contrôle de la température 6 de la batterie 2. En effet, les batteries électriques destinées à stocker de l'énergie électrique produisent de l'énergie thermique et ont une gamme de température de fonctionnement optimal dans laquelle il est avantageux qu'elles soient maintenues. Le module de contrôle de la température 6 comprend selon l'invention un troisième circuit fluidique 61 apte à recevoir un troisième fluide intermédiaire. Le troisième fluide intermédiaire est avantageusement de l'eau glycolée. Le module de contrôle de la température 6 comprend selon l'invention un deuxième échangeur thermique basse température 62. Selon l'invention, le module de contrôle de la température 6 de la batterie 2 est configuré pour assurer un échange thermique avec le premier échangeur thermique 51 de la PAC 5 et/ou avec le deuxième échangeur thermique 52 de la PAC. Selon cette possibilité, le transfert d'énergie thermique est assuré entre la batterie et le groupe de climatisation avantageusement par l'intermédiaire du module de contrôle de la température 6 de la batterie 2 et la PAC 5. Le deuxième échangeur thermique basse température 62 est destiné à évacuer l'énergie thermique non nécessaire de la batterie 2. Selon l'invention, le troisième circuit fluidique 61 comprend une première branche de dérivation 63 configurée pour assurer la circulation du troisième fluide intermédiaire sans circulation au niveau de l'échangeur thermique basse température 62. Avantageusement, la circulation du troisième fluide intermédiaire dans la branche de dérivation 63 est contrôlée par une vanne ou un thermostat 66 ouvrant la circulation dans la branche de dérivation 63 lorsque la température du deuxième fluide intermédiaire est inférieure à une température de consigne pour un fonctionnement optimal de la batterie 2, par exemple une température de 30°C.

Selon une configuration avantageuse illustrée aux figures et notamment à la figure 1, le dispositif selon l'invention se répartit avantageusement dans trois zones du véhicule.

Le premier échangeur thermique basse température 32 et le deuxième échangeur thermique basse température 62 sont avantageusement disposés dans une première zone 11 correspondant à la façade avant d'un véhicule. On entend par façade avant la zone qui se situe en avant du moteur relativement au sens de marche avant du véhicule. La façade avant comprend avantageusement un ventilateur 10 placé en avant des premier et deuxième échangeurs thermiques basse température 32 et 62. Le ventilateur 10 permet d'augmenter la circulation d'air au niveau des premier et deuxième échangeurs thermiques basse température 32 et 62, notamment lorsque le véhicule est à l'arrêt de sorte à augmenter les échanges thermiques entre l'air ambiant et respectivement le premier fluide intermédiaire du premier circuit fluidique 31 et le troisième fluide intermédiaire du troisième circuit fluidique 61.

La batterie 2, la machine électrique 1 et avantageusement le module de contrôle de la température 3 de la machine électrique 1 et le module de contrôle de la température 6 de la batterie à l'exception des échangeurs thermiques basse températures 32 et 62, sont agencés dans une deuxième zone 12 correspondant à un coffre ou à la zone sous le capot du véhicule. Avantageusement, la PAC 5 est également agencée dans la deuxième zone 12.

La troisième zone 13 comprend avantageusement l'échangeur thermique 4 du groupe de climatisation. La troisième zone 13 correspond avantageusement au groupe de climatisation situé dans l'habitacle du véhicule permettant de contrôler la température de l'air soufflé dans la cabine ainsi que son débit et son orientation.

Selon un mode de réalisation, l'échangeur thermique 4 du groupe de climatisation est connecté fluidiquement au deuxième échangeur thermique 52 de la PAC 5 avantageusement par un deuxième circuit intermédiaire 7. Le deuxième circuit intermédiaire 7 est apte à recevoir un deuxième fluide intermédiaire. Le deuxième échangeur thermique 52 de la PAC 5 est connecté fluidiquement à l'échangeur thermique 4 par une première connexion fluidique 71 assurant la circulation du deuxième fluide intermédiaire du deuxième échangeur thermique 52 de la PAC 5 vers l'échangeur thermique 4. L'échangeur thermique 4 est connecté fluidiquement par une deuxième connexion fluidique 72 assurant la circulation du deuxième fluide intermédiaire de l'échangeur thermique 4 vers le deuxième échangeur thermique 52 de la PAC 5. Le deuxième circuit intermédiaire 7 comprend avantageusement une pompe, non représentée, pour assurer la mise en circulation du deuxième fluide intermédiaire dans ledit circuit.

Le deuxième fluide intermédiaire est avantageusement de l'eau glycolée.

Le module de contrôle de la température 3 de la machine électrique 1 est configuré pour assurer le contrôle de la température de la machine électrique 1 et avantageusement le maintien de la machine électrique 1 dans une gamme de température optimale, c'est-à-dire le maintien de la température de la machine électrique à une température ou une gamme de température de consigne. Le module de contrôle de la température 3 permet par son premier circuit fluidique 31 reliant fluidiquement la machine électrique 1 et le premier échangeur thermique basse température 32 permet d'évacuer l'énergie thermique de la machine électrique 1 notamment vers l'air ambiant au travers du premier échangeur thermique basse température 32.

Selon l'invention, le module de contrôle de la température 3 est configuré pour assurer un transfert thermique avec le premier échangeur 51 de la PAC 5. Le premier circuit fluidique 31 du module de contrôle de la température 3 comprend une boucle de circulation principale du premier fluide intermédiaire. La boucle de circulation principale assure la circulation du premier fluide intermédiaire entre la machine électrique 1 et le premier échangeur thermique basse température 32 ou au niveau de la machine électrique 1, en circuit fermé, excluant le premier échangeur thermique basse température 32. La boucle principale de circulation comprend une connexion fluidique 307-308 assurant la circulation du premier fluide intermédiaire depuis la machine électrique 1 vers le premier échangeur thermique basse température 32. Avantageusement, la connexion fluidique 307-308 comprend une vanne ou thermostat 35 destiné à contrôler la circulation du premier fluide intermédiaire dans le premier circuit fluidique 31. La boucle principale de circulation comprend une connexion fluidique 309-310 assurant la circulation du premier fluide intermédiaire depuis le premier échangeur thermique basse température 32 vers la machine électrique 1. Avantageusement, le premier circuit fluidique 31comprend une pompe 36, préférentiellement agencée sur la connexion fluidique 309-310, destinée à mettre en circulation le premier fluide intermédiaire dans le premier circuit fluidique 31. Avantageusement, le premier circuit fluidique 31 comprend une première branche de dérivation 33 agencée entre la connexion fluidique 307-308 et 309-310. La première branche de dérivation 33 permet d'assurer une circulation du premier fluide intermédiaire excluant le premier échangeur basse température 32.

Selon un mode de réalisation préféré de l'invention, le premier circuit fluidique 31 comprend une deuxième branche de dérivation 34. La deuxième branche de dérivation 34 est configurée pour assurer la connexion fluidique avec le premier échangeur thermique 51 de la PAC 5. La branche de dérivation 34 comprend une première connexion fluidique 341 assurant la circulation du premier fluide intermédiaire du premier échangeur thermique 51 de la PAC 5 vers la boucle principale de circulation du premier circuit fluidique 31. Plus précisément, la première connexion fluidique 341 assure la circulation du premier fluide intermédiaire entre le premier échangeur 51 et l'une des connexions fluidiques 307, 308, 309, 310 de la boucle principale du premier circuit fluidique 31. Sur les figures, la première connexion fluidique 341 est connectée fluidiquement à la connexion fluidique 310. La branche de dérivation 34 comprend une deuxième connexion fluidique 342 assurant la circulation du premier fluide intermédiaire depuis la boucle principale de circulation du premier circuit fluidique 31vers le premier échangeur thermique 51 de la PAC 5. Plus précisément, la deuxième connexion fluidique 342 assure la circulation du premier fluide intermédiaire entre l'une des connexions fluidiques 307, 308, 309, 310 de la boucle principale du premier circuit fluidique 31 et le premier échangeur 51. Sur les figures, la deuxième connexion fluidique 342 est connectée fluidiquement à la connexion fluidique 310.

Le module de contrôle de la température 6 de la batterie 2 est configuré pour assurer le contrôle de la température de la batterie 2 et avantageusement le maintien de la batterie 2 dans une gamme de température optimale, c'est-à-dire le maintien de la température de la machine électrique à une température ou une gamme de température de consigne. Le module de contrôle de la température 6 permet par son troisième circuit fluidique 61 reliant fluidiquement la batterie 2 et le deuxième échangeur thermique basse température 62 permet d'évacuer l'énergie thermique de la batterie 2 notamment vers l'air ambiant au travers du deuxième échangeur thermique basse température 62.

Selon un mode de réalisation avantageux de l'invention, le module de contrôle de la température 6 est configuré pour assurer un transfert thermique avec la PAC 5. Le troisième circuit fluidique 61 du module de contrôle de la température 6 comprend une boucle de circulation principale du troisième fluide intermédiaire. La boucle de circulation principale assure la circulation du troisième fluide intermédiaire entre la batterie 2 et le deuxième échangeur thermique basse température 62 ou au niveau de la batterie 2, en circuit fermé, excluant le deuxième échangeur thermique basse température 62. La boucle principale de circulation comprend une connexion fluidique 607-608 assurant la circulation du premier fluide intermédiaire depuis la batterie 2 vers le deuxième échangeur thermique basse température 62. Avantageusement, la connexion fluidique 607-608 comprend une vanne ou thermostat 66 destiné à contrôler la circulation du troisième fluide intermédiaire dans le troisième circuit fluidique 61. La boucle principale de circulation comprend une connexion fluidique 609-610 assurant la circulation du troisième fluide intermédiaire depuis le deuxième échangeur thermique basse température 62 vers la batterie 2. Avantageusement, le troisième circuit fluidique 61 comprend une pompe 67, préférentiellement agencée sur la connexion fluidique 609-610, destinée à mettre en circulation le troisième fluide intermédiaire dans le troisième circuit fluidique 61. Avantageusement, le troisième circuit fluidique 61 comprend une première branche de dérivation 63 agencée entre la connexion fluidique 607-608 et 609-610. La première branche de dérivation 63 permet d'assurer une circulation du troisième fluide intermédiaire excluant le deuxième échangeur basse température 62.

Selon un mode de réalisation de l'invention, le troisième circuit fluidique 61 comprend une deuxième branche de dérivation 64. La deuxième branche de dérivation 64 est configurée pour assurer la connexion fluidique avec le premier échangeur thermique 51 de la PAC 5. La branche de dérivation 64 comprend une première connexion fluidique 641 assurant la circulation du troisième fluide intermédiaire depuis la boucle principale de circulation du troisième circuit fluidique 61vers le premier échangeur thermique 51 de la PAC 5. Plus précisément, la première connexion fluidique 641 assure la circulation du troisième fluide intermédiaire entre l'une des connexions fluidiques 607, 608, 609, 610 de la boucle principale du troisième circuit fluidique 61 et le premier échangeur 51. Sur les figures, la première connexion fluidique 641 est connectée fluidiquement à la connexion fluidique 607. La branche de dérivation 64 comprend une deuxième connexion fluidique 642 assurant la circulation du troisième fluide intermédiaire du premier échangeur thermique 51 de la PAC 5 vers la boucle principale de circulation du troisième circuit fluidique 61. Plus précisément, la deuxième connexion fluidique 642 assure la circulation du troisième fluide intermédiaire entre le premier échangeur 51 et l'une des connexions fluidiques 607, 608, 609, 610 de la boucle principale du troisième circuit fluidique 61. Sur les figures, la deuxième connexion fluidique 642 est connectée fluidiquement à la connexion fluidique 607.

Selon une possibilité, le troisième circuit fluidique 61 comprend une troisième branche de dérivation 65. La troisième branche de dérivation 65 est configurée pour assurer la connexion fluidique avec le deuxième échangeur thermique 52 de la PAC 5. La troisième branche de dérivation 65 comprend une première connexion fluidique 651 assurant la circulation du troisième fluide intermédiaire de la boucle principale de circulation du troisième circuit fluidique 61 vers le deuxième échangeur thermique 51 de la PAC 5. Plus précisément, la première connexion fluidique 651 assure la circulation du troisième fluide intermédiaire entre l'une des connexions fluidiques 607, 608, 609, 610 de la boucle principale du troisième circuit fluidique 61 et le deuxième échangeur 52 de la PAC 5. La troisième branche de dérivation 65 comprend une deuxième connexion fluidique 652 assurant la circulation du troisième fluide intermédiaire depuis le deuxième échangeur thermique 52 de la PAC 5 vers la boucle principale de circulation du troisième circuit fluidique 61. Plus précisément, la deuxième connexion fluidique 652 assure la circulation du troisième fluide intermédiaire entre le deuxième échangeur 51 et l'une des connexions fluidiques 607, 608, 609, 610 de la boucle principale du troisième circuit fluidique 61.

Le dispositif selon l'invention est destiné avantageusement à la gestion de l'énergie thermique. Les besoins et les sources d'énergie thermique sont variables en fonction de plusieurs facteurs dont notamment la température extérieure, l'état de la machine électrique 1, en marche ou à l'arrêt, l'état du véhicule, en circulation ou à l'arrêt, la température dans l'habitacle du véhicule, la température souhaitée dans l'habitacle.

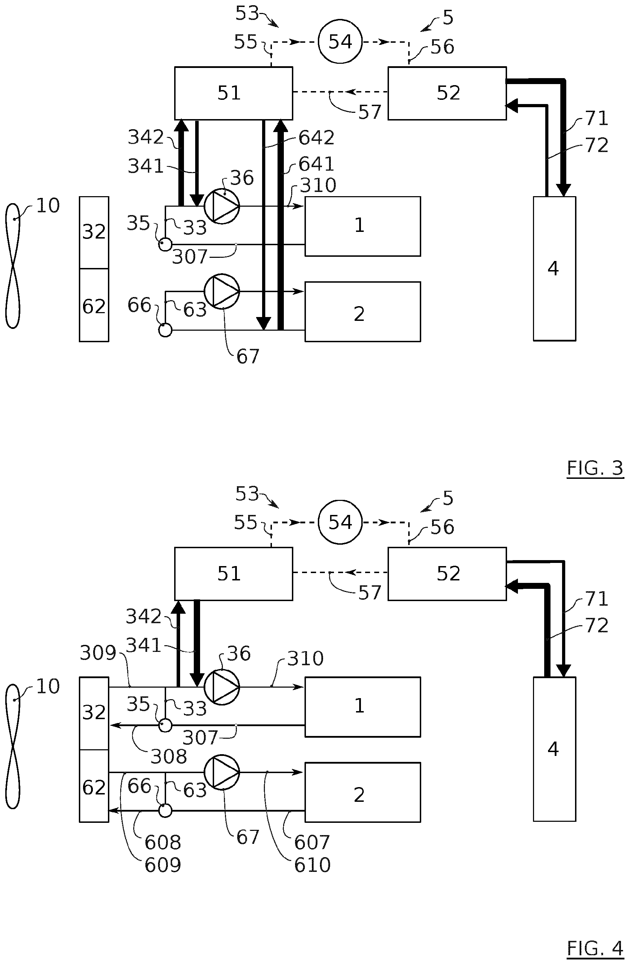

Selon une première possibilité, la température extérieure est basse, par exemple en hiver lorsque la température extérieure est inférieure à 10°C préférentiellement inférieure à 0°C. Selon cette première possibilité, il existe un besoin de chauffage dans l'habitacle. La température de consigne du groupe de climatisation est supérieure à la température extérieure. Il existe donc un besoin d'énergie thermique dans l'habitacle, c'est à dire notamment au niveau de la troisième zone 13. Cette première possibilité est illustrée aux figures 2 et 3.

Sur les figures 2 à 4, les flèches plus épaisses illustrent le sens de transfert de l'énergie thermique.

En figure 2, le groupe de climatisation demande un besoin d'énergie thermique, une température de consigne de la température de l'habitacle est définie. Cette température de consigne est supérieure à la température extérieure. Le véhicule est soit en circulation soit à l'arrêt, la machine électrique 1 est en marche. Avantageusement, l'énergie thermique pouvant être utilisée pour atteindre cette température de consigne réside principalement dans la machine électrique 1 et/ou l'air extérieur. L'énergie thermique est issue du module de contrôle de la température 3 de la machine électrique 1. Dans ce mode de réalisation, ce sont des calories de l'air ambiant ainsi que de la machine électrique qui sont exploitées. Ce mode de réalisation illustre l'usage de la chaleur pour chauffer lors d'un démarrage à froid l'habitacle et la batterie.

Selon un mode de réalisation préféré, la machine électrique 1 est en fonctionnement et transforme l'énergie électrique en énergie mécanique. Lors de cette transformation de l'énergie thermique est produite. Cette énergie thermique est évacuée de la machine électrique 1 par le premier circuit fluidique 31. Le premier fluide intermédiaire récupère l'énergie thermique de la machine électrique 1. À titre d'exemple, le premier circuit fluidique 31 assure la circulation du premier fluide intermédiaire au contact de la machine électrique pour permettre un transfert thermique par conduction. Le premier fluide intermédiaire circule dans le premier circuit fluidique 31 pour atteindre le premier échangeur thermique 51 de la PAC 5. À titre d'exemple illustré en figure 2, la circulation du premier fluide intermédiaire se fait depuis la machine électrique 1 dans la connexion fluidique 307 de la boucle principale du premier circuit fluidique. Au niveau de la vanne 35, la circulation du premier fluide intermédiaire est envoyée avantageusement dans la première branche 33 et avantageusement dans la deuxième branche de dérivation 34 plus précisément dans la deuxième connexion fluidique 342. Le premier fluide intermédiaire circule dans le premier échangeur thermique 51 de la PAC 5. Le premier fluide intermédiaire cède son énergie thermique au fluide caloporteur de la PAC. Le premier fluide intermédiaire retourne vers la boucle principale de circulation avantageusement par la première connexion fluidique 341 de la branche de dérivation 34. Le premier fluide intermédiaire circule préférentiellement dans la connexion fluidique 310 pour retourner à la machine électrique 1. Le premier fluide intermédiaire est mis en mouvement dans le premier circuit fluidique 31 par l'actionnement d'une pompe 36.

L'énergie thermique récupérée par le fluide caloporteur de la PAC 5 va être transmise à l'échangeur thermique 4 du groupe de climatisation. La PAC 5 permet grâce au compresseur 54 d'optimiser l'énergie thermique transmise à l'échangeur thermique 4. Dans cette possibilité illustrée à la figure 2, la source chaude de la PAC 5 est au moins partiellement le premier fluide intermédiaire du module de contrôle de la température 3 de la machine électrique 1. La source froide est au moins partiellement le deuxième fluide intermédiaire du deuxième circuit intermédiaire 7 de l'échangeur thermique 4 du groupe de climatisation. Le fonctionnement de la PAC 5 à fluide intermédiaire est ensuite classique.

Selon un mode de réalisation avantageux de cette première possibilité, le premier fluide intermédiaire du premier circuit fluidique 31 récupère de l'énergie thermique également de l'air extérieur au niveau du premier échangeur thermique basse température 32. La circulation du premier fluide intermédiaire est identique au paragraphe précédent avec une circulation supplémentaire au niveau du premier échangeur thermique basse température 32. Au niveau de la vanne 35, la circulation du premier fluide intermédiaire est envoyée dans la première branche 33 et également dans la connexion fluidique 308. Le premier fluide intermédiaire issue de la connexion fluidique 308 circule dans le premier échangeur thermique basse température 32 où il récupère de l'énergie thermique de l'air extérieur avant de retourner dans la connexion fluidique 309 puis avantageusement dans la deuxième branche de dérivation 34 avec le premier fluide intermédiaire issue de la première branche de dérivation 33.

Selon une variante du paragraphe précédent, le premier fluide intermédiaire du premier circuit fluidique 31 évacue de l'énergie thermique également vers l'air extérieur au niveau du premier échangeur thermique basse température 32. La circulation du premier fluide intermédiaire est identique au paragraphe précédent avec une circulation supplémentaire au niveau du premier échangeur thermique basse température 32. Au niveau de la vanne 35, la circulation du premier fluide intermédiaire est envoyée au moins partiellement dans la première branche 33 et également dans la connexion fluidique 308. L'orientation du premier fluide intermédiaire entre la première branche de dérivation 33 et la connexion fluidique 308 en direction du premier échangeur thermique basse température 32 est avantageusement fonction de la température du premier fluide intermédiaire. Préférentiellement, lorsque la température du premier fluide intermédiaire atteint 60°C, la circulation du premier fluide intermédiaire se fait également au niveau du premier échangeur thermique basse température. Le premier fluide intermédiaire issu de la connexion fluidique 308 circule dans le premier échangeur thermique basse température 32 où il évacue de l'énergie thermique de l'air extérieur avant de retourner dans la connexion fluidique 309 puis avantageusement directement dans la connexion fluidique 310 de la boucle principale de circulation en direction de la machine électrique 1 de sorte à la maintenir dans une gamme de température optimale. Cette variante est mise en place lorsque la température du premier fluide intermédiaire atteint un température de consigne, notamment dans le cas où la demande d'énergie thermique au niveau de l'échangeur thermique 4 du groupe de climatisation n'est pas importante et qu'il est ainsi nécessaire d'évacuer une partie de l'énergie thermique de la machine électrique 1.

Selon cette première possibilité, le troisième circuit fluidique 61 du module de contrôle de la température 6 de la batterie 2 est configuré pour exclure le deuxième échangeur thermique basse température 62 de la circulation du troisième fluide intermédiaire. De cette manière, la batterie 2 n'évacue pas son énergie thermique, il n'y a pas de déperdition d'énergie thermique, et peut atteindre une température de consigne correspondant à la température optimale de fonctionnement de la batterie 2. À titre d'exemple, la gamme de température de fonctionnement optimal pour une batterie 2 est de 25 à 30°C. Avantageusement, le troisième fluide intermédiaire circule dans le troisième circuit fluidique 61 et notamment dans la troisième branche de dérivation 65. La circulation du troisième fluide intermédiaire dans la troisième branche de dérivation 65 permet un apport d'énergie thermique à la batterie 2 utile pour permettre à la batterie d'atteindre sa température, ou gamme de température, optimale notamment en vue du démarrage du véhicule. Le troisième fluide intermédiaire circule dans la première connexion fluidique 651 en direction du deuxième échangeur thermique 52 de la PAC 5. Dans le deuxième échangeur thermique 52, le troisième fluide intermédiaire capte de l'énergie thermique et retourne vers la batterie 2 par la deuxième connexion fluidique 652. Le troisième fluide intermédiaire transfert l'énergie thermique au profit de la batterie 2 de sorte à permettre son réchauffement.

En figure 3, le groupe de climatisation demande un besoin d'énergie thermique, une température de consigne de la température de l'habitacle est définie. Cette température de consigne étant supérieure à la température extérieure. Le véhicule est soit en circulation soit à l'arrêt, la machine électrique 1 est en marche. Avantageusement, l'énergie thermique pouvant être utilisée pour atteindre cette température de consigne réside principalement dans la machine électrique 1 et dans la batterie 2. L'énergie thermique est donc issue du module de contrôle de la température 3 de la machine électrique 1 et du module de contrôle de la température 6 de la batterie 2. En effet, la batterie 2 présente une inertie thermique importante qui peut être utilisée par exemple lors du démarrage du véhicule avant que la température de la machine électrique 1 soit suffisante pour alimenter en source chaude la PAC 5 ou bien lorsque la température de la batterie permet de compléter l'énergie thermique issue du module de contrôle de la température 3 de la machine électrique 1. Cette configuration permet de fournir à la PAC 5 une source chaude à température élevée à titre d'exemple 10°C à 50°C assurant un rendement de la PAC 5 plus important. A titre d'exemple, l'ordre de grandeur des COP est de 3 voire 4. Dans cette configuration illustrée à la figure 3, le premier circuit fluidique 31 est configuré pour exclure le premier échangeur thermique basse température 32 de la circulation du premier fluide intermédiaire dans. De même au niveau du troisième circuit fluidique 61 qui est configuré pour exclure le deuxième échangeur thermique basse température 62 de la circulation du troisième fluide intermédiaire. Cette configuration évite les risques de condensation au niveau des échangeurs basse température 32 et 62 et donc les risques de givrages entrainant ainsi une économie d'énergie puisqu'il n'est plus nécessaire d'utiliser de l'énergie au profit du dégivrage des échangeurs thermiques basse température 32 et 62.

L'énergie thermique de la batterie 2 est transférée vers le premier échangeur thermique 51 de la PAC 1. Le troisième fluide intermédiaire circule dans la boucle principale du troisième circuit fluidique, excluant le deuxième échangeur thermique basse température 62. Le troisième fluide intermédiaire circule dans la deuxième branche de dérivation 64 et plus précisément dans la connexion fluidique 641 en direction du premier échangeur thermique 51 de la PAC 5. Le troisième fluide intermédiaire transfère l'énergie thermique au fluide caloporteur de la PAC dans le premier échangeur thermique 51. Le troisième fluide intermédiaire retourne vers la boucle principale de circulation préférentiellement par la connexion fluidique 642. La source chaude du premier échangeur thermique 51 comprend le premier fluide intermédiaire et le troisième fluide intermédiaire. Avantageusement, les premier et deuxième fluides intermédiaires sont identiques et sont mélangés en entrée de l'échangeur 52.

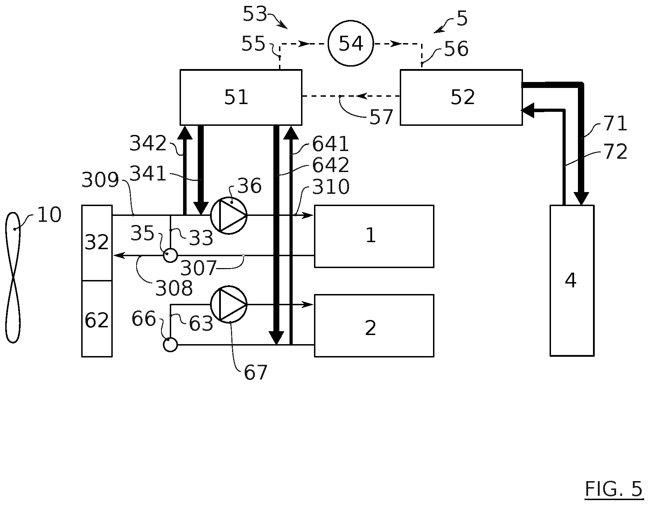

Selon une deuxième possibilité, la température extérieure est élevée, par exemple en été lorsque la température extérieure est supérieure à 25°C. Selon cette deuxième possibilité, il existe un besoin de refroidissement dans l'habitacle. La température de consigne du groupe de climatisation est inférieure à la température extérieure. Il existe donc un besoin d'évacuer l'énergie thermique de l'habitacle, c'est à dire notamment au niveau de la troisième zone 13. Cette deuxième possibilité est illustrée aux figures 4 et 5.

En figure 4, l'énergie thermique est issue de l'échangeur thermique 4 du groupe de climatisation. La figure 4 illustre le rejet de la chaleur de l'habitacle de la boucle de réfrigération sur le circuit de refroidissement de la machine électrique. L'énergie thermique est transmise au deuxième fluide intermédiaire circulant dans la deuxième connexion fluidique 72 assurant la connexion fluidique entre l'échangeur thermique 4 et le deuxième échangeur thermique 52 de la PAC 5. Le deuxième fluide intermédiaire transfert l'énergie thermique vers le fluide caloporteur de la PAC 5 dans le deuxième échangeur thermique 52. La PAC 5 permet de transférer l'énergie thermique du fluide caloporteur vers le premier fluide intermédiaire au niveau du premier échangeur thermique 51. Le premier fluide intermédiaire ressort du premier échangeur thermique 51 par la première connexion fluidique 341 de la branche de dérivation 34 en direction de la boucle principale de circulation du premier circuit fluidique. Le premier fluide intermédiaire circule dans la connexion fluidique 310 et aboutit au contact de la machine électrique 1. La machine électrique 1 récupère au moins une partie de l'énergie thermique du groupe de climatisation et donc de l'habitacle. La machine électrique 1 peut absorber l'énergie thermique grâce à son inertie thermique et permettre ainsi de limiter les pics de pression sur la PAC..

Le premier fluide intermédiaire circule dans la boucle principale de circulation et avantageusement au niveau du premier échangeur thermique basse température 32 de sorte à évacuer l'énergie thermique vers l'air extérieur. Cette configuration limite les sollicitations du ventilateur 10. Les ventilateurs 10 sont avantageusement commandés par la pression du premier et troisième circuit fluidique 31, 61. En limitant, la pression dans lesdits circuits, les rendements des premier et troisième circuits fluidiques sont améliorés et permet de limiter la consommation des ventilateurs.

Le troisième circuit fluidique 61 du module de contrôle de la température 6 de la batterie fonctionne avantageusement en circulation dans la boucle principale de circulation. Le troisième fluide intermédiaire circule avantageusement entre la batterie 2 et le deuxième échangeur thermique basse température 62.

En figure 5, en plus de ce qui est décrit ci-dessus en référence à la figure 4, le dispositif permet de transférer de l'énergie thermique vers la batterie 2. Le fluide caloporteur circule dans le premier échangeur thermique 51 de la PAC 5 dans lequel il capte de l'énergie thermique et ressort par la deuxième connexion fluidique 642 en direction de la boucle principale de circulation du circuit fluidique 53. Le troisième fluide intermédiaire circule en direction de la batterie 2 au moins dans la connexion fluidique 610. Cette disposition permet de maintenir la batterie 2 dans une gamme de température de fonctionnement optimal.

L'invention concerne selon un autre aspect un procédé de gestion de l'énergie thermique d'un véhicule comprenant un moteur électrique comprenant un dispositif de gestion tel que décrit ci-dessus.

### LISTE DES REFERENCES

- 1: machine électrique
- 2: batterie
- 3: module de contrôle de la température de la machine électrique
- 31: premier circuit fluidique
- 32: premier échangeur thermique basse température
- 33: première branche de dérivation
- 34: deuxième branche de dérivation
- 341: première connexion fluidique du premier échangeur thermique de la PAC vers la boucle principale de circulation
- 342: deuxième connexion fluidique de la boucle principale de circulation vers le premier échangeur thermique de la PAC
- 35: thermostat ou vanne
- 36: pompe
- 307: connexion fluidique de la machine électrique vers une vanne ou thermostat
- 308: connexion fluidique de la vanne ou thermostat vers le premier échangeur thermique basse température
- 309: connexion fluidique du premier échangeur thermique basse température vers une vanne ou un thermostat
- 310: connexion fluidique de la vanne ou thermostat vers la machine électrique
- 4: échangeur thermique groupe de climatisation
- 5: pompe à chaleur
- 51: premier échangeur thermique
- 52: deuxième échangeur thermique
- 53: circuit fluidique
- 54: compresseur
- 55: connexion fluidique du premier échangeur thermique vers le compresseur
- 56: connexion fluidique du compresseur vers le deuxième échangeur thermique
- 57: connexion fluidique du deuxième échangeur thermique vers le premier échangeur thermique
- 6: module de contrôle de la température de la batterie
- 61: troisième circuit fluidique
- 62: deuxième échangeur thermique basse température
- 63: première branche de dérivation
- 64: deuxième branche de dérivation
- 641: connexion fluidique du troisième circuit fluidique vers le premier échangeur thermique de la PAC
- 642: connexion fluidique du premier échangeur thermique de la PAC vers le troisième circuit fluidique
- 65: troisième branche de dérivation
- 651: première connexion fluidique du troisième circuit fluidique vers le deuxième échangeur thermique de la PAC
- 652: deuxième connexion fluidique du deuxième échangeur thermique de la PAC vers le troisième circuit fluidique
- 66: thermostat ou vanne
- 67: pompe
- 7: deuxième circuit intermédiaire
- 71: première connexion fluidique du deuxième échangeur thermique de la PAC vers l'échangeur thermique du groupe de climatisation
- 72: deuxième connexion fluidique de l'échangeur thermique du groupe de climatisation vers le deuxième échangeur thermique de la PAC
- 10: ventilateur
- 11: façade avant véhicule
- 12: sous le capot ou dans le coffre
- 13: groupe de climatisation

## Revendications

1. Dispositif de gestion de l'énergie thermique d'un véhicule comprenant un moteur électrique, comprenant :
- une batterie électrique (2) configurée pour stocker l'énergie électrique du véhicule,
- une machine électrique (1) pour transformer l'énergie électrique stockée dans la batterie (2) en énergie mécanique pour le véhicule,
- un module de contrôle de la température (3) de la machine électrique comprenant un premier circuit fluidique (31) apte à recevoir un premier fluide intermédiaire et un premier échangeur thermique basse température (32),
- un échangeur thermique d'un groupe de climatisation (4),
- une pompe à chaleur eau/eau (5) comprenant un circuit fluidique (53) apte à recevoir un fluide caloporteur,
- un premier échangeur thermique (51) configuré pour assurer l'échange thermique entre le fluide caloporteur de la pompe à chaleur (5) et au moins le premier fluide intermédiaire du premier circuit fluidique (31) du module de contrôle de la température de la machine électrique (3),
- un deuxième échangeur thermique (52) configuré pour assurer l'échange thermique entre le fluide caloporteur de la pompe à chaleur (5) et au moins un deuxième fluide intermédiaire de l'échangeur thermique du groupe de climatisation (4);
- un compresseur (54),
- le circuit fluidique étant configuré pour mettre en connexion fluidique le premier échangeur thermique (51) avec le compresseur (54), le compresseur (54) avec le deuxième échangeur thermique (52) et le deuxième échangeur thermique (52) avec le premier échangeur thermique (51),
**caractérisé en ce que**
le dispositif comprend un module de contrôle de la température de la batterie (6) comprenant un troisième circuit fluidique (61) apte à recevoir un troisième fluide intermédiaire et un deuxième échangeur thermique basse température (62),
le troisième circuit fluidique (61) comprenant une première branche de dérivation (63) configurée pour empêcher une circulation du troisième fluide intermédiaire au niveau du deuxième échangeur thermique basse température (62), une deuxième branche de dérivation (64) configurée pour assurer la circulation du troisième fluide intermédiaire dans le premier échangeur (51) de la pompe à chaleur (5) et une troisième branche de dérivation (65) configurée pour assurer la circulation du troisième fluide intermédiaire dans le deuxième échangeur (52) de la pompe à chaleur (5).

2. Dispositif selon la revendication précédente dans lequel le premier circuit fluidique comprenant une première branche de dérivation (33) configurée pour empêcher une circulation du premier fluide intermédiaire au niveau du premier échangeur thermique basse température (32) et une deuxième branche de dérivation (34) configurée pour assurer la circulation du premier fluide intermédiaire dans le premier échangeur (51) de la pompe à chaleur (5).

3. Dispositif selon l'une quelconque des revendications précédentes dans lequel le module de contrôle de la température de la machine électrique (3) comprend au moins une vanne (35) et/ou un thermostat et/ou une pompe de mise en circulation (36) du premier fluide intermédiaire.

4. Dispositif selon l'une quelconque des revendications précédentes dans lequel le module de contrôle de la température de la batterie (6) comprend au moins une vanne (66) et/ou un thermostat et/ou une pompe de mise en circulation (67) du troisième fluide intermédiaire.

5. Véhicule comprenant un moteur électrique comprenant un dispositif selon l'une quelconque des revendications précédentes.

6. Procédé de gestion de l'énergie thermique d'un véhicule comprenant un moteur électrique comprenant un dispositif selon l'une quelconque des revendications 1 à 4 dans lequel la pompe à chaleur (5) est configurée pour transférer l'énergie thermique entre la machine électrique (1) et l'échangeur du groupe de climatisation (4) par
- Une étape a) d'échange thermique dans le premier échangeur (51) de la PAC (5) entre le premier fluide intermédiaire du premier circuit fluidique (31) de la machine électrique (1) et le fluide caloporteur de la PAC (5), pour céder l'énergie thermique du premier fluide intermédiaire du premier circuit fluidique (31) de la machine électrique (1) au profit du fluide caloporteur de la PAC (5) et
- Une étape b) d'échange thermique dans le deuxième échangeur (52) de la PAC (5) entre le fluide caloporteur de la PAC (5) et le deuxième fluide intermédiaire du deuxième circuit intermédiaire (7) du groupe de climatisation (4) pour céder l'énergie thermique du fluide caloporteur de la PAC (5) au profit du deuxième fluide intermédiaire du deuxième circuit intermédiaire (7) du groupe de climatisation (4),ou alternativement par
- Une étape c) d'échange thermique dans le deuxième échangeur (52) de la PAC (5) entre le deuxième fluide intermédiaire du deuxième circuit intermédiaire (7) du groupe de climatisation (4) et le fluide caloporteur de la PAC (5) pour céder l'énergie thermique du deuxième fluide intermédiaire du deuxième circuit intermédiaire (7) du groupe de climatisation (4) au profit du fluide caloporteur de la PAC (5), et
- Une étape d) d'échange thermique dans le premier échangeur (51) de la PAC (5) entre le fluide caloporteur de la PAC (5) et le premier fluide intermédiaire du premier circuit fluidique (31) de la machine électrique (1) pour céder l'énergie thermique du fluide caloporteur de la PAC (5) au profit du premier fluide intermédiaire du premier circuit fluidique (31) de la machine électrique (1), et que la pompe à chaleur (5) est configurée pour transférer de l'énergie thermique à la batterie (2) pour l'aide au démarrage par
- Une étape e) alternative ou cumulative avec l'étape b) d'échange thermique dans le deuxième échangeur (52) de la PAC (5) entre le fluide caloporteur de la PAC (5) et le troisième fluide intermédiaire du troisième circuit fluidique (61) de la batterie (2) pour céder l'énergie thermique du fluide caloporteur de la PAC (5) au profit du troisième fluide intermédiaire du troisième circuit fluidique (61) de la batterie.

7. Procédé selon la revendication précédente dans lequel la pompe à chaleur (5) est configurée pour transférer de l'énergie thermique entre la batterie (2) et l'échangeur du groupe de climatisation (4) par
- Une étape f) alternative ou cumulative avec l'étape a), d'échange thermique dans le premier échangeur (51) de la PAC (5) entre le troisième fluide intermédiaire du troisième circuit fluidique (61) de la batterie (2) et le fluide caloporteur de la PAC (5) pour céder l'énergie thermique du troisième fluide intermédiaire du troisième circuit fluidique (61) de la batterie (2) au profit du fluide caloporteur de la PAC (5) ou
- Une étape g) alternative ou cumulative avec l'étape c), d'échange thermique dans le premier échangeur (51) de la PAC (5) entre le fluide caloporteur de la PAC (5) et le troisième fluide intermédiaire du troisième circuit fluidique (61) de la batterie (2) pour céder l'énergie thermique du fluide caloporteur de la PAC (5) au profit troisième fluide intermédiaire du troisième circuit fluidique (61) de la batterie (2).

## Patentansprüche

1. Verwaltungsvorrichtung für die Wärmeenergie eines Fahrzeugs, das einen Elektromotor umfasst, Folgendes umfassend:
- eine elektrische Batterie (2), die dazu konfiguriert ist, die Elektroenergie des Fahrzeugs zu speichern,
- eine elektrische Maschine (1) zum Umwandeln der in der Batterie (2) gespeicherten Elektroenergie in mechanische Energie für das Fahrzeug,
- ein Temperatursteuermodul (3) für die elektrische Maschine, das einen ersten Fluidkreislauf (31), der dazu ausgelegt ist, ein erstes Zwischenfluid aufzunehmen, und einen ersten Niedertemperatur-Wärmetauscher (32) umfasst,
- einen Wärmetauscher einer Klimaanlagenbaugruppe (4),
- eine Wasser/Wasser-Wärmepumpe (5), die einen Fluidkreislauf (53) umfasst, der dazu ausgelegt ist, ein Wärmeträgerfluid aufzunehmen,
- einen ersten Wärmetauscher (51), der dazu konfiguriert ist, den Wärmeaustausch zwischen dem Wärmeträgerfluid der Wärmepumpe (5) und mindestens dem ersten Zwischenfluid des ersten Fluidkreislaufs (31) des Temperatursteuermoduls für die elektrische Maschine (3) zu ermöglichen,
- einen zweiten Wärmetauscher (52), der dazu konfiguriert ist, den Wärmeaustausch zwischen dem Wärmeträgerfluid der Wärmepumpe (5) und mindestens einem zweiten Zwischenfluid des Wärmetauschers der Klimaanlagenbaugruppe (4) zu ermöglichen;
- einen Kompressor (54),
- wobei der Fluidkreislauf dazu konfiguriert ist, den ersten Wärmetauscher (51) mit dem Kompressor (54), den Kompressor (54) mit dem zweiten Wärmetauscher (52) und den zweiten Wärmetauscher (52) mit dem ersten Wärmetauscher (51) in Fluidverbindung zu bringen,
**dadurch gekennzeichnet, dass**
die Vorrichtung ein Temperatursteuermodul für die Batterie (6) umfasst, das einen dritten Fluidkreislauf (61), der dazu ausgelegt ist, ein drittes Zwischenfluid aufzunehmen, und einen zweiten Niedertemperatur-Wärmetauscher (62) umfasst,
wobei der dritte Fluidkreislauf (61) eine erste Abzweigung (63), die dazu konfiguriert ist, eine Zirkulation des dritten Zwischenfluids auf Höhe des zweiten Niedertemperatur-Wärmetauschers (62) zu verhindern, eine zweite Abzweigung (64), die dazu konfiguriert ist, die Zirkulation des dritten Zwischenfluids im ersten Wärmetauscher (51) der Wärmepumpe (5) zu ermöglichen, und eine dritte Abzweigung (65) umfasst, die dazu konfiguriert ist, die Zirkulation des dritten Zwischenfluids im zweiten Wärmetauscher (52) der Wärmepumpe (5) zu ermöglichen.

2. Vorrichtung nach dem vorhergehenden Anspruch, wobei der erste Fluidkreislauf eine erste Abzweigung (33), die dazu konfiguriert ist, eine Zirkulation des ersten Zwischenfluids auf Höhe des ersten Niedertemperatur-Wärmetauschers (32) zu verhindern, und eine zweite Abzweigung (34) umfasst, die dazu konfiguriert ist, die Zirkulation des ersten Zwischenfluids im ersten Wärmetauscher (51) der Wärmepumpe (5) zu ermöglichen.

3. Vorrichtung nach einem der vorhergehenden Ansprüche, wobei das Temperatursteuermodul für die elektrische Maschine (3) mindestens ein Ventil (35) und/oder einen Temperaturregler und/oder eine Zirkulationspumpe (36) für das erste Zwischenfluid umfasst.

4. Vorrichtung nach einem der vorhergehenden Ansprüche, wobei das Temperatursteuermodul für die Batterie (6) mindestens ein Ventil (66) und/oder einen Temperaturregler und/oder eine Zirkulationspumpe (67) für das dritte Zwischenfluid umfasst.

5. Fahrzeug, das einen Elektromotor umfasst und eine Vorrichtung nach einem der vorhergehenden Ansprüche umfasst.

6. Verwaltungsverfahren für die Wärmeenergie eines Fahrzeugs, das einen Elektromotor umfasst und eine Vorrichtung nach einem der Ansprüche 1 bis 4 umfasst, wobei die Wärmepumpe (5) dazu konfiguriert ist, die Wärmeenergie zwischen der elektrischen Maschine (1) und dem Wärmetauscher der Klimaanlagenbaugruppe (4) zu übertragen durch
- einen Schritt a) des Wärmeaustauschs im ersten Wärmetauscher (51) der Wärmepumpe (5) zwischen dem ersten Zwischenfluid des ersten Fluidkreislaufs (31) der elektrischen Maschine (1) und dem Wärmeträgerfluid der Wärmepumpe (5), um die Wärmeenergie des ersten Zwischenfluids des ersten Fluidkreislaufs (31) der elektrischen Maschine (1) zugunsten des Wärmeträgerfluids der Wärmepumpe (5) abzugeben, und
- einen Schritt b) des Wärmeaustauschs im zweiten Wärmetauscher (52) der Wärmepumpe (5) zwischen dem Wärmeträgerfluid der Wärmepumpe (5) und dem zweiten Zwischenfluid des zweiten Zwischenkreislaufs (7) der Klimaanlagenbaugruppe (4), um die Wärmeenergie des Wärmeträgerfluids der Wärmepumpe (5) zugunsten des zweiten Zwischenfluids des zweiten Zwischenkreislaufs (7) der Klimaanlagenbaugruppe (4) abzugeben, oder alternativ durch
- einen Schritt c) des Wärmeaustauschs im zweiten Wärmetauscher (52) der Wärmepumpe (5) zwischen dem zweiten Zwischenfluid des zweiten Zwischenkreislaufs (7) der Klimaanlagenbaugruppe (4) und dem Wärmeträgerfluid der Wärmepumpe (5), um die Wärmeenergie des zweiten Zwischenfluids des zweiten Zwischenkreislaufs (7) der Klimaanlagenbaugruppe (4) zugunsten des Wärmeträgerfluids der Wärmepumpe (5) abzugeben, und
- einen Schritt d) des Wärmeaustauschs im ersten Wärmetauscher (51) der Wärmepumpe (5) zwischen dem Wärmeträgerfluid der Wärmepumpe (5) und dem ersten Zwischenfluid des ersten Fluidkreislaufs (31) der elektrischen Maschine (1), um die Wärmeenergie des Wärmeträgerfluids der Wärmepumpe (5) zugunsten des ersten Zwischenfluids des ersten Fluidkreislaufs (31) der elektrischen Maschine (1) abzugeben, und dass die Wärmepumpe (5) dazu konfiguriert ist, die Wärmeenergie an die Batterie (2) zur Starthilfe zu übertragen durch
- einen Schritt e) alternativ oder kumulativ zu Schritt b) des Wärmeaustauschs im zweiten Wärmetauscher (52) der Wärmepumpe (5) zwischen dem Wärmeträgerfluid der Wärmepumpe (5) und dem dritten Zwischenfluid des dritten Fluidkreislaufs (61) der Batterie (2), um die Wärmeenergie des Wärmeträgerfluids der Wärmepumpe (5) zugunsten des dritten Zwischenfluids des dritten Fluidkreislaufs (61) der Batterie abzugeben.

7. Verfahren nach dem vorhergehenden Anspruch, wobei die Wärmepumpe (5) dazu konfiguriert ist, die Wärmeenergie zwischen der Batterie (2) und dem Wärmetauscher der Klimaanlagenbaugruppe (4) zu übertragen durch
- einen Schritt f) alternativ oder kumulativ zu Schritt a) des Wärmeaustauschs im ersten Wärmetauscher (51) der Wärmepumpe (5) zwischen dem dritten Zwischenfluid des dritten Fluidkreislaufs (61) der Batterie (2) und dem Wärmeträgerfluid der Wärmepumpe (5), um die Wärmeenergie des dritten Zwischenfluids des dritten Fluidkreislaufs (61) der Batterie (2) zugunsten des Wärmeträgerfluids der Wärmepumpe (5) abzugeben, oder
- einen Schritt g) alternativ oder kumulativ zu Schritt c) des Wärmeaustauschs im ersten Wärmetauscher (51) der Wärmepumpe (5) zwischen dem Wärmeträgerfluid der Wärmepumpe (5) und dem dritten Zwischenfluid des dritten Fluidkreislaufs (61) der Batterie (2), um die Wärmeenergie des Wärmeträgerfluids der Wärmepumpe (5) zugunsten des dritten Zwischenfluids des dritten Fluidkreislaufs (61) der Batterie (2) abzugeben.

## Claims

1. A device for managing the thermal energy of a vehicle comprising an electric motor, comprising:
- an electric battery (2) configured to store the electric energy of the vehicle,
- an electric machine (1) for transforming the electric energy stored in the battery (2) into mechanical energy for the vehicle,
- a module (3) for controlling the temperature of the electric machine comprising a first fluid circuit (31) capable of receiving a first intermediate fluid and a first low temperature heat exchanger (32),
- a heat exchanger of an air conditioning unit (4),
- a water/water heat pump (5) comprising a fluid circuit (53) capable of receiving a heat transfer fluid,
- a first heat exchanger (51) configured to ensure the heat exchange between the heat transfer fluid of the heat pump (5) and at least the first intermediate fluid of the first fluid circuit (31) of the electric machine temperature control module (3),
- a second heat exchanger (52) configured to ensure the heat exchange between the heat transfer fluid of the heat pump (5) and at least one second intermediate fluid of the heat exchanger of the air conditioning unit (4);
- a compressor (54),
- the fluid circuit being configured to fluidly connect the first heat exchanger (51) with the compressor (54), the compressor (54) with the second heat exchanger (52) and the second heat exchanger (52) with the first heat exchanger (51),
**characterised in that** the device comprises a battery temperature control module (6) comprising a third fluid circuit (61) capable of receiving a third intermediate fluid and a second low temperature heat exchanger (62), the third fluid circuit (61) comprising a first bypass branch (63) configured to prevent circulation of the third intermediate fluid at the second low temperature heat exchanger (62), a second bypass branch (64) configured to ensure the circulation of the third intermediate fluid in the first exchanger (51) of the heat pump (5) and a third bypass branch (65) configured to ensure the circulation of the third intermediate fluid in the second exchanger (52) of the heat pump (5).

2. The device according to the preceding claim wherein the first fluid circuit comprising a first bypass branch (33) configured to prevent circulation of the first intermediate fluid at the first low temperature heat exchanger (32) and a second bypass branch (34) configured to ensure the circulation of the first intermediate fluid in the first exchanger (51) of the heat pump (5).

3. The device according to any one of the preceding claims wherein the electric machine temperature control module (3) comprises at least one valve (35) and/or a thermostat and/or a circulation pump (36) for the first intermediate fluid.

4. The device according to any one of the preceding claims wherein the battery temperature control module (6) comprises at least one valve (66) and/or one thermostat and/or one circulation pump (67) for the third intermediate fluid.

5. A vehicle comprising an electric motor comprising a device according to any one of the preceding claims.

6. A method for managing the thermal energy of a vehicle comprising an electric motor comprising a device according to any one of claims 1 to 4 wherein the heat pump (5) is configured to transfer thermal energy between the electric machine (1) and the exchanger of the air conditioning unit (4) by
- A step a) of heat exchange in the first exchanger (51) of the heat pump (5) between the first intermediate fluid of the first fluid circuit (31) of the electric machine (1) and the heat transfer fluid of the heat pump (5), to transfer the thermal energy of the first intermediate fluid of the first fluid circuit (31) of the electric machine (1) for the benefit of the heat transfer fluid of the heat pump (5) and
- A step b) of heat exchange in the second exchanger (52) of the heat pump (5) between the heat transfer fluid of the heat pump (5) and the second intermediate fluid of the second intermediate circuit (7) of the air conditioning unit (4) to transfer the thermal energy of the heat transfer fluid of the heat pump (5) for the benefit of the second intermediate fluid of the second intermediate circuit (7) of the air conditioning unit (4), or alternatively by
- A step c) of heat exchange in the second exchanger (52) of the heat pump (5) between the second intermediate fluid of the second intermediate circuit (7) of the air conditioning unit (4) and the heat transfer fluid of the heat pump (5) to transfer the thermal energy of the second intermediate fluid of the second intermediate circuit (7) of the air conditioning unit (4) for the benefit of the heat transfer fluid of the heat pump (5), and
- A step d) of heat exchange in the first exchanger (51) of the heat pump (5) between the heat transfer fluid of the heat pump (5) and the first intermediate fluid of the first fluid circuit (31) of the electric machine (1) to transfer the thermal energy of the heat transfer fluid of the heat pump (5) for the benefit of the first intermediate fluid of the first fluid circuit (31) of the electric machine (1), and that the heat pump (5) is configured to transfer thermal energy to the battery (2) for starting assistance by
- A step e) which is alternative or cumulative with step b), of heat exchange in the second exchanger (52) of the heat pump (5) between the heat transfer fluid of the heat pump (5) and the third intermediate fluid of the third fluid circuit (61) of the battery (2) to transfer the thermal energy of the heat transfer fluid of the heat pump (5) for the benefit of the third intermediate fluid of the third fluid circuit (61) of the battery.

7. The method according to the preceding claim wherein the heat pump (5) is configured to transfer thermal energy between the battery (2) and the exchanger of the air conditioning unit (4) by
- A step f) which is alternative or cumulative with step a), of heat exchange in the first exchanger (51) of the heat pump (5) between the third intermediate fluid of the third fluid circuit (61) of the battery (2) and the heat transfer fluid of the heat pump (5) to transfer the thermal energy of the third intermediate fluid of the third fluid circuit (61) of the battery (2) for the benefit of the heat transfer fluid of the heat pump (5) or
- A step g) which is alternative or cumulative with step c), of heat exchange in the first exchanger (51) of the heat pump (5) between the heat transfer fluid of the heat pump (5) and the third intermediate fluid of the third fluid circuit (61) of the battery (2) to transfer the thermal energy of the heat transfer fluid of the heat pump (5) to the benefit of the third intermediate fluid of the third fluid circuit (61) of the battery (2).
